# DEMANDE DE BREVET EUROPEEN

(11) **EP 3 767 728 A1**
(43) Date de publication de la demande: **20.01.2021**
(21) Numéro de dépôt: 19305958.1
(22) Date de dépôt: 19.07.2019
(51) Int. Cl.: H01M 10/0525, H01M 10/0565

(54) **ELECTROLYTE POLYMÈRE SOLIDE COMPRENANT UN CARBONATE DE POLYALCÈNE**

(71) Demandeur: TOTAL SE, 92400 Courbevoie (FR); The Universite de Montreal, Montreal, Quebec H3T 1J4 (CA)
(72) Inventeur: AYMÉ-PERROT, David, 68330 HUNINGUE (FR); DOLLÉ, Mickaël, MONTRÉAL, QUÉBEC H2V 2V5 (CA); LEPAGE, David, MONTRÉAL, QUÉBEC H4G 1T2 (CA); PRÉBÉ, Arnaud, TERREBONNE, QUÉBEC J6V1K7 (CA)
(74) Mandataire: Lavoix

(57) **Abrégé**

L'invention concerne un électrolyte polymère solide comprenant une matrice polymère comprenant au moins un sel ionique, ladite matrice polymère comprenant au moins un carbonate de polyalcène, au moins un deuxième polymère différent du carbonate de polyalcène, et au moins le carbonate d'alcène issu de la décomposition du carbonate de polyalcène.

La présente invention concerne également un procédé de préparation de l'électrolyte polymère solide et une batterie comprenant l'électrolyte polymère solide.

## Description

### Domaine de l'invention

La présente invention concerne le domaine des électrolytes, en particulier des électrolytes pour batterie.

En particulier, la présente invention concerne le domaine des électrolytes pour batterie à l'état solide.

### Etat de la technique

La commercialisation des batteries Li-Ion à partir des années 90 demeure une vraie révolution dans le domaine du stockage d'énergie. Grâce aux améliorations continues de performances, on assiste à un essor exponentiel de cette technologie. Les capacités des batteries permettent notamment de repousser toujours plus loin l'autonomie des systèmes électroniques portables ; elles ont atteint aujourd'hui un seuil qui permet une intégration dans les véhicules pour une traction hybride ou purement électrique. L'automobile de demain sera électrique. Dès lors une course toujours plus effrénée à la performance des batteries est lancée pour maximiser la densité d'énergie de celles-ci et ainsi atteindre des autonomies pour le véhicule électrique les plus élevées possible.

En outre, la sécurité des systèmes de stockage d'énergie embarqués au sein de véhicule est primordiale, d'autant plus que leur densité d'énergie est accrue. Il est fondamental d'empêcher que l'énergie électrochimique de la batterie soit libérée de façon thermique en cas d'incident. C'est la problématique soulevée dans le cas des batteries Li-ion classiques. Celles-ci présentent un électrolyte organique inflammable qui peut mener en cas de fort échauffement à un emballement thermique de la batterie, qui peut aller jusqu'à l'explosion. Ainsi, les packs de batteries Li-ion sont aujourd'hui équipés de systèmes de gestion thermique complexe permettant normalement d'empêcher ce type de scénario critique et de se rapprocher d'un risque d'occurrence nul.

Dans ce contexte, on constate un effort de recherche conséquent destiné à développer des batteries dite « tout solide ». L'idée fondamentale consiste à remplacer l'électrolyte liquide par un électrolyte conducteur ionique solide. Un tel matériau évite d'avoir une vaporisation et une inflammation de l'électrolyte en cas de surchauffe, ce qui empêche de facto l'emballement thermique. Ceci permettrait une gestion thermique simplifiée donc moins conséquente (en masse et volume). En outre, l'utilisation d'un matériau solide en tant qu'électrolyte peut permettre d'obtenir une plage de stabilité électrochimique différente voire étendue par rapport aux solvants classiques (essentiellement des carbonates cycliques ou linéaires). On peut notamment envisager d'avoir un électrolyte solide stable vis-à-vis du lithium métal, comme tel est le cas avec l'oxyde de polyéthylène (PEO) et ainsi limiter/ralentir les croissances dendritiques en comparaison de ce qui se produit en milieu liquide. L'utilisation du lithium métal, qui est l'élément le plus réducteur, comme électrode négative, peut permettre ainsi une augmentation de la tension de fonctionnement de la cellule électrochimique et donc de sa densité d'énergie.

Plusieurs approches techniques pour réaliser des électrolytes solides ont été et sont investiguées.

On répertorie notamment les électrolytes solides polymères. Parmi ceux-ci, le PEO est la solution technologique aujourd'hui la plus fiable mais nécessite une température élevée (>60°C) pour fonctionner efficacement. Les fonctions éthers du PEO permettent de dissocier un sel de lithium (typiquement LiTFSi) et la mobilité des chaînes obtenue à haute température (70-80°C) permet alors de favoriser la diffusion des cations Li⁺ au sein de la matrice polymérique. Le PEO affiche une conductivité maximale de 10⁻³ S/cm à 80°C. De larges gammes de polymères ont été testées pour atteindre notamment de meilleures conductivité à l'ambiante que celle affichée par ce dernier.

Dans cette optique, nombre de travaux ont concerné/concernent le développement d'électrolytes gelifiés. Il s'agit de systèmes polymériques dans lesquels est piégé un électrolyte liquide, lequel permet de favoriser la mobilité des ions. Néanmoins, même si les matériaux affichent ainsi de meilleures conductivités (notamment à l'ambiante), ils présentent des inconvénients majeurs notamment une perte notable de tenue mécanique. En outre, il y a un vrai risque de perte d'électrolyte en cas d'échauffement du système. Autrement dit le gain en conductivité ionique se traduit par une perte du caractère sécuritaire pour la batterie.

Outre les approches polymériques, de nombreuses phases inorganiques (céramiques ou verre) conductrices de Li⁺ sont investiguées. Citons notamment le Li₇La₃Zr₂O₁₂ (LLZO) ou compositions substituées [structure Grenat], le Li₁₊ₓAlₓTi₂₋ₓ(PO4)₃ (LATP) [structure NASICON] ou le Li_{0.05-3x}La_{0.5+x}TiO₃ (LLTO) [structure Perovskite], qui sont des produits commerciaux. Le LLZO présente le grand avantage d'être stable vis-à-vis du lithium métal, contrairement au LATP et au LLTO compte tenu de la présence du Ti⁴⁺ dans leur structure. Ces produits présentent des conductivités « intra-grains » prometteuses (entre 10⁻⁴ et 10⁻³ S/cm à T_{amb}). La vraie problématique provient des joints de grains, il est essentiel dans ce cas de limiter la contribution résistive aux interfaces entre grains. C'est pourquoi ces matériaux sont classiquement mis en forme par frittage. Les plaques de céramique obtenues présentent alors une fragilité importante qui apparait rédhibitoire pour en minimiser l'épaisseur et donc pour une intégration dans des cellules de plusieurs Ah.

### Buts de l'invention

L'invention a pour but de résoudre le problème technique consistant à fournir un électrolyte conducteur ionique sécurisant le stockage de batteries.

L'invention a en particulier pour but de résoudre le problème technique consistant à fournir un électrolyte conducteur ionique solide, en particulier pour des batteries à l'état solide.

L'invention a pour but de résoudre le problème technique consistant à fournir un électrolyte solide conducteur ionique à une température inférieure ou égale à 60°C.

L'invention a pour but de résoudre le problème technique consistant à fournir un électrolyte solide conducteur ionique de Li⁺.

L'invention a aussi pour but de résoudre le problème technique consistant à fournir un procédé de préparation industriel ou industrialisable d'un électrolyte conducteur ionique, et en particulier un procédé facilement industrialisable et simple à mettre en oeuvre.

L'invention a aussi pour but de résoudre les problèmes techniques cités avec un coût limité.

### Description détaillée de l'invention

Il a été découvert de manière surprenante que l'on peut résoudre au moins un, et de préférence l'ensemble, des problèmes techniques évoqués en fournissant un électrolyte polymère solide comprenant une matrice polymère comprenant au moins un sel ionique, ladite matrice polymère comprenant au moins un carbonate de polyalcène, au moins un deuxième polymère différent du carbonate de polyalcène, et au moins le carbonate d'alcène issu de la décomposition du carbonate de polyalcène.

Parmi les solutions proposées selon l'état de la technique mettant en oeuvre des carbonates de polyalcènes, on retrouve l'utilisation de substrats supportant un électrolyte solide. On peut citer notamment Adv. Ener. Mater. 2015, 5, 1501082, J. Zhang *et al*, qui utilisent une membrane de cellulose non tissée comme support à du carbonate de polyalcène (PPC). Le PPC et le sel LiTFSI sont dissous dans l'acétonitrile. La solution homogène est coulée sur le substrat non tissé de cellulose puis évaporée sous vide (100°C - 24h). Le système PPC/cellulose présente une tenue mécanique améliorée par rapport au PPC seul ainsi, et affiche une bonne conductivité à l'ambiante (3,0x10⁻⁴ S/cm à 20°C) et au-delà. Cependant, cette solution présente le désavantage technique que le carbonate de polyalcène doive être déposé sur un substrat pour avoir les résultats intéressants. De même, selon Electro. Comm. 66 (2016) 46-48, K. Kimura *et al*, rapportent la réalisation d'un système poly(ethylene carbonate) (PEC) fortement chargé en sel : 80% de LiTFSI. Le système seul n'ayant pas une bonne tenue mécanique, une matrice de polyimide est utilisée en tant que substrat poreux supportant l'électrolyte solide. Le PEC et le sel LiTFSI sont dissous dans l'acétonitrile. La solution est coulée sur la matrice de polyimide puis évaporée sous vide (60°C - 24h). La conductivité ionique du matériau est de 10⁻⁵ S/cm à 30°C. Ici également, le carbonate de polyalcène est déposé sur un substrat pour avoir des résultats intéressants et ne constitue donc pas un procédé suffisamment simple industriellement.

Ces solutions techniques antérieures ne sont donc pas satisfaisantes.

La présente invention concerne également un procédé de préparation d'un électrolyte polymère solide tel que défini selon l'invention, ledit procédé comprenant le mélangeage du carbonate de polyalcène et du deuxième polymère par voie fondue ou par voie solvant dans lequel le carbonate de polyalcène et le deuxième polymère sont tous les deux solubles, et une décomposition partielle du carbonate de polyalcène en carbonate d'alcène, pour l'obtention d'un électrolyte polymère solide tel que défini selon l'invention.

Avantageusement, une matrice selon l'invention constitue un système polymérique autosupporté capable de conduire efficacement les ions, typiquement des ions Li⁺, à température ambiante (typiquement 20°C) et au-delà. L'invention permet donc de surmonter la problématique technique de l'état de la technique consistant à supporter par un substrat le carbonate de polyalcène.

Avantageusement, une matrice selon l'invention comprend au moins un deuxième polymère, lequel est amorphe.

Avantageusement, une matrice selon l'invention comprend une fraction de liquide dans la matrice du fait de la décomposition d'un polymère.

Avantageusement, une matrice selon l'invention présente une morphologie spécifique présentant une très bonne conductivité ionique.

Selon l'invention, la matrice peut comprendre un ou plusieurs polymères autres que le carbonate de polyalcène. Ainsi, la matrice peut comprendre un ou plusieurs polymères du type deuxième polymère selon l'invention.

Selon un mode de réalisation, la matrice comprend comme deuxième polymère, un ou plusieurs polymères choisis parmi : les polyoléfines, les polycarbonates, les polymères halogénés, les polymères acryliques, les polymères acrylates, les polymères méthacrylates, les polymères vinyl acétate, les polyéthers, les polyesters, les polyamides, les polymères aromatiques, les polymères élastomères, par exemple le HNBR, les polyisoprènes, les polymères caoutchoucs, et l'un quelconque de leurs mélanges.

De préférence, le deuxième polymère est un élastomère.

Typiquement, la matrice comprend au moins deux phases polymères l'une comprenant au moins un carbonate de polyalcène qui soit capable de se dégrader ou réduire en l'alcène carbonate, l'autre un deuxième polymère au moins.

Typiquement, la matrice comprend au moins 10ppm de carbonate d'acène par rapport à la masse totale de la matrice. Selon une variante, la matrice comprend au moins 100 ppm, voire au moins 1000 ppm, de carbonate d'acène par rapport à la masse totale de la matrice.

Typiquement, le polycarbonate d'alcène est décomposé au plus à 99%, préférentiellement au plus 70%, encore plus préférentiellement au plus 50% en masse par rapport à la masse initiale du polycarbonate d'alcène. Selon une variante, la matrice comprend moins de 50% de carbonate d'acène par rapport à la masse totale de la matrice.

Selon une variante, le carbonate d'alcène est sous forme de monomère.

Avantageusement, selon la présente invention, la matrice ne comprend pas de macroséparation entre la phase contenant le carbonate de polyalcène et la phase contenant le deuxième polymère.

Ainsi, le deuxième polymère est choisi afin d'éviter une macroséparation de phases. On entend par absence de macroséparation de phases que l'on ne détecte sensiblement pas de phase pure de polymère non dispersé présentant une dimension supérieure à quelques centaines de µm. On peut rechercher une macroséparation de phases par la méthode spectroscopie infrarouge à transformée de Fourier à l'échelle nanométrique. On peut également rechercher une macroséparation de phases par une technique de microscopie électronique à balayage.

Plus généralement, toutes les bases de polymères peuvent être associées au carbonate de polyalcène sous réserve que la morphologie n'implique pas une macroséparation de phase comme défini plus haut.

En général, une quantité de carbonate de polyalcène vis-à-vis de la quantité totale de polymères en présence au maximum de 80% (masse/masse) permet d'obtenir des propriétés mécaniques suffisantes en cyclage électrochimique ou au contact du Lithium métal et permet donc la préparation d'un électrolyte solide satisfaisant.

Selon un mode de réalisation, le carbonate de polyalcène est présent en quantité de 5 à 80%, et de préférence de 10 à 70%, en masse par rapport à la masse totale de polymères de la matrice.

Selon un mode de réalisation, une quantité de carbonate de polyalcène de 10 à 70% (masse/masse) est préférée. On préfère en général encore une quantité de carbonate de polyalcène de 15 à 60% (masse/masse). Encore de préférence, la quantité de carbonate de polyalcène va de 20 à 50% (masse/masse).

Le carbonate de polyalcène ne présente pas une masse molaire spécifique : il pourra être utilisé seul ou en mélange de différentes masses molaires.

Avantageusement, ladite matrice polymère comprend un carbonate de polyalcène de haute masse molaire et un carbonate de polyalcène de faible masse molaire, relativement l'un par rapport à l'autre.

Ainsi, les oligomères de basse masse molaire (<15000g/mol) permettent de fluidifier le mélange par plastification des polymères de hautes masses molaires (>15000g/mol). Ce mode de réalisation permet avantageusement d'adapter la viscosité finale du mélange par rapport au procédé choisi, avec ou sans solvant, ou à la formulation finale, avec ou sans charges, ou encore au produit final, plus ou moins épais. Par conséquent, la proportion de carbonate de polyalcène de basses masses molaires vis-à-vis de la quantité totale de polyalcène carbonate varie typiquement entre 0.1 et 99.9%, préférentiellement entre 5 et 90%, et encore préférentiellement entre 10 et 80%.

A titre d'exemple, on peut citer comme carbonate de polyalcène de faible masse molaire un PPC polyol, comme par exemple le Converge 212-10, et comme carbonate de polyalcène de haute masse molaire le QPac®40.

Selon un mode de réalisation, le sel ionique est choisi parmi les sels d'un ion métallique dont le métal appartient à la colonne I du tableau périodique.

Ainsi, le ou les sels ioniques sont dissociés au moins partiellement dans au moins une des phases polymères.

Selon un mode de réalisation, le sel ionique est choisi parmi le groupe constitué de LiBETI, LiC₂F₅SO₃, LiC₄F₉SO₃, LiCF₃SO₃, NaI, NaSCN, NaBr, KI, KBr, LiClO₄, LiBF₄, LiAsF₆, LiPF₆, LiNO₃, Li(CF₃SO₂)₂N, Li(CF₃SO₂)₃C, LiN(SO₂C₂F₅)₂, lithium alkyl fluorophosphates, lithium difluoro(oxalato)borate, lithium bis(oxalato) borate, MTFSiLi, STFSiLi, et l'un quelconque de leurs mélanges.

Selon un mode de réalisation, la matrice comprend des charges solides minérales ou organiques.

Ainsi, selon un mode de réalisation, la matrice comprend des charges solides minérales ou organiques pour apporter différentes propriétés comme un renfort mécanique, une aide à la conductivité ionique par exemple ou encore l'insertion et la désinsertion d'un ion métallique.

A titre illustratif, des charges solides qui peuvent favoriser la conductivité sont :
- soit des charges inertes comme par exemple Al₂O₃, SiO₂, cellulose, amidon, non conductrices de cations mais qui peuvent favoriser le transport des ions via des interactions en surface desdites charges,
- soit des charges conductrices de cations en volume (par exemple des céramiques ou verres).

Selon un mode de réalisation, la matrice comprend des charges solides permettant l'insertion et la désinsertion de sels métalliques, dites « actives ». A titre illustratif, on peut citer le C-LiFePO₄, mais sont également à considérer toutes les matières actives connues par l'homme du métier, comme par exemple des matières actives d'électrodes positives (exemple : LiCoO₂, LiMnO₄, LiNi_{1/3}Mn_{1/3}Co_{1/3}O₂, ...) ou négatives (exemple : Li₄Ti₅O₁₂, graphite).

Selon un mode de réalisation, la matrice comprend des charges électroconductrices. On peut citer par exemple le noir de carbone conducteur mais également le graphite, le graphène, les nanofibres de carbone et les nanotubes de carbones ou un mélange de ceux-ci.

Selon un mode de réalisation, l'électrolyte polymère solide est sous forme d'un film d'une épaisseur inférieure à 1mm.

Un film selon l'invention présente typiquement une épaisseur de 10 à 500 micromètres, par exemple de 80 à 300 micromètres et typiquement de 90 à 200 micromètres.

Typiquement, le procédé de préparation selon l'invention comprend le mélangeage des polymères dont le carbonate de polyalcène et le deuxième polymère soit en voie sèche « polymères à l'état fondus » (appelé aussi en voie fondue) ou en voie solvant (appelé aussi en voie humide).

Selon un mode de réalisation, le procédé comprend un chauffage lors du mélangeage du carbonate de polyalcène et du deuxième polymère.

Avantageusement, selon un mode de réalisation, le mélangeage en voie fondue est réalisé, totalement ou en partie, ou suivi d'un chauffage, à une température suffisante pour une décomposition partielle du carbonate de polyalcène en carbonate d'alcène.

Selon une variante, le mélangeage en voie fondue est réalisé totalement à une température suffisante pour une décomposition partielle du carbonate de polyalcène en carbonate d'alcène.

Selon une variante, le mélangeage en voie fondue est réalisé partiellement, et de préférence en fin de mélangeage, à une température suffisante pour une décomposition partielle du carbonate de polyalcène en carbonate d'alcène.

Selon un mode de réalisation, le mélangeage en voie solvant est réalisé à température ambiante (typiquement 20°C) puis le mélange est séché à une température suffisante pour éliminer le solvant et pour une décomposition partielle du carbonate de polyalcène en carbonate d'alcène.

En voie liquide, on utilise préférentiellement un solvant dont la température d'ébullition est en deçà de la température de décomposition du carbonate de polyalcène.

Selon un mode de réalisation, le procédé comprend un mélangeage en voie fondue du carbonate de polyalcène et du deuxième polymère, le mélangeage étant réalisé au moins partiellement en contact avec des charges inorganiques favorisant la décomposition partielle du carbonate de polyalcène en carbonate d'alcène.

Selon un mode de réalisation, le procédé comprend, après séchage, l'ajout d'un métal réducteur, et par exemple de lithium, dans des conditions décomposant partiellement le polyalcène carbonate en carbonate d'alcène. Avantageusement, en présence d'un tel métal, il n'est donc pas nécessaire de chauffer pour obtenir la décomposition partielle du carbonate de polyalcène en carbonate d'alcène.

De préférence, le mélange est ensuite mis en forme sous forme de film puis séché.

Avantageusement, le mélange des polymères permet l'obtention d'un film ne nécessitant pas de substrat, contrairement à l'état de la technique précité.

De préférence, le mélange est séché lors d'une étape de séchage.

Typiquement, le séchage du mélange est réalisé pendant un temps suffisant pour atteindre le séchage souhaité, et par exemple pendant au moins une heure à 60°C sous vide. Le vide est réalisé selon les conditions connues de l'homme du métier comme par exemple par une pompe à vide.

De préférence, selon une variante, après séchage en voie liquide ou en fin de mélangeage en voie fondue, le matériau est chauffé à une température libérant *in-situ* une fraction de carbonate d'alcène au sein de la matrice polymère. Ainsi, selon une variante, le procédé comprend un chauffage à une température suffisante, appelée aussi température de conditionnement, décomposant partiellement le carbonate de polyalcène en carbonate d'alcène.

Avantageusement, en présence d'un métal favorisant la décomposition partielle du carbonate de polyalcène en carbonate d'alcène, on peut réduire la température de conditionnement, par exemple pour la préparation de l'électrolyte solide au contact d'une anode en métal, par exemple en lithium métal. Avantageusement, selon un mode de réalisation, le chauffage à la température de conditionnement s'effectue sur une batterie comprenant l'électrolyte polymère solide, par exemple avant commercialisation ou utilisation.

Selon un mode de réalisation, le procédé comprend un chauffage de l'électrolyte polymère solide suite au mélangeage, à la température de conditionnement
Par exemple la température de conditionnement est supérieure à 80°C, par exemple supérieure à 100°C, et encore par exemple supérieure à 120°C.

Selon un mode de réalisation la température de conditionnement est supérieure à 150°C, et par exemple supérieure à 170°C.

Ainsi, avantageusement, selon une variante, dans le procédé selon l'invention le mélange obtenu est traité à la température de conditionnement pendant un temps suffisant pour améliorer sa conductivité ionique (typiquement 1 à 30 minutes) puis ramené à température ambiante.

Selon une variante, le procédé comprend l'ajout au mélange polymère des additifs spécifiques afin d'améliorer et/ou optimiser le procédé de fabrication de l'électrolyte polymère solide.

Selon une variante, le procédé comprend la réticulation du ou des deuxièmes polymères, de préférence lors du mélangeage avec le carbonate de polyalcène. Cette réticulation peut avoir lieu uniquement sur le ou les deuxièmes polymères (autre que polyalcène carbonate) ou en co-réticulation avec les polyalcènes carbonate tant que celle-ci n'entrave pas la génération in-situ de l'alcène carbonate correspondant.

Selon une variante, le procédé comprend l'ajout d'un ou plusieurs composés formant agent de réticulation du ou des deuxièmes polymères mélangés au carbonate de polyalcène.

Selon une variante, le procédé comprend l'ajout d'un ou plusieurs coagents aidant à la réticulation et à l'homogénéisation de celle-ci. On peut par exemple citer les peroxydes organiques comme agents réticulant ou encore le triallyl cyanurate comme coagent. Mais on peut également se servir de tous composés permettant la réticulation du deuxième polymère comme des photoamorceurs ou des composés soufrés, typiques par exemple de la réticulation des caoutchoucs. On peut également utiliser des réactions chimiques de composés bi-fonctionnels sur les chaines pendantes du deuxième polymère (si existantes) comme les fonctions anhydrides maléiques, époxydes ou encore acides, alcools, amines, amides ou esters dès lors qu'une réaction sur les fonctions pendantes entraine la formation de ponts entre chaines de polymère et par conséquent une réticulation du système. Avantageusement, une réticulation augmente la cohésion de la matrice. Ainsi, l'utilisation d'agent de réticulation et éventuellement de coagent est donc utile sans être nécessaire à l'invention et dépend directement de l'application visée et du procédé envisagé.

L'invention concerne aussi une électrode comprenant au moins un électrolyte polymère solide tel que défini selon l'invention ou susceptible d'être obtenu selon un procédé tel que défini selon l'invention.

L'invention concerne aussi une batterie comprenant au moins un électrolyte polymère solide tel que défini selon l'invention ou susceptible d'être obtenu selon un procédé tel que défini selon l'invention.

Selon une variante, la batterie est une batterie Lithium à électrolyte polymère solide.

En particulier, l'électrolyte polymère solide sous forme de film peut être utilisé comme membrane d'une batterie de stockage d'énergie. La membrane est typiquement insérée entre deux électrodes de la batterie.

Sur les figures :
La figure 1 illustre la tension (voltage en V) en fonction du temps (heures) d'un système avec électrolyte solide polymère selon l'exemple 2b entre deux lithium métallique, à 60°C ;
La figure 2 illustre un système avec électrolyte solide polymère selon l'exemple 4 entre deux électrodes lithium métalliques, à 60°C, un court-circuit se produit en moins d'une demi-heure d'utilisation ;
La figure 3 illustre une première décharge d'une électrode de composition décrite dans l'exemple 5 ;
La figure 4 illustre la stabilité en cyclage d'une demi-pile utilisant une électrode de C-LFP (exemple 5) vs. Li métal.

### Exemples

Les pourcentages sont exprimés en masse par rapport à la masse totale la composition considérée, sauf indication contraire.

La température est la température ambiante (20°C), sauf indication contraire. La pression est la pression atmosphérique (101325 Pa), sauf indication contraire.

Les caractérisations électrochimiques ont été réalisées en utilisant la spectroscopie d'impédance électrochimique (appareil MTZ-35, BioLogic) avec un accessoire contrôlant la température (appareil ITS, BioLogic). La morphologie a été obtenue par images microscopie électronique à balayage (MEB).

### Exemple 1: Electrolyte solide préparé en voie fondue (ou voie sèche)

1.a. Le mélange a été réalisé en incorporant 10.1 g de HNBR (zetpol 2010), 5.5 g de PPC (QPac40), 5.3 g de PPC polyol (Converge 212-10) et 8.5 g de LiTFSI dans un mélangeur interne. Après l'ajout des matières, ceux-ci ont été mélangées à 85±10°C pendant 5 minutes.

**Tableau 1**

| Matière | % (m/m) |
|---|---|
| HNBR (Zetpol 2010L) | 34.4 |
| PPC (QPac40) | 18.8 |
| PPC (Converge212-10) | 17.9 |
| LiTFSI | 28.9 |

| | |
|---|---|
| % (m/m) : % exprimé en masse par rapport à la masse totale de la matière mélangée. | |

Le mélange final a été conformé en plusieurs films d'environ 100 µm d'épaisseur par calandrage en utilisant une Teachline CR72T de Dr Collin. Les films sont ensuite séchés pendant au moins 12 heures à 60°C sous un vide effectué par une pompe Edwards RV12.

1.b. Un film de la même composition a été conditionné pendant 1 heure à 190°C.

La mesure de conductivité des différents films a été effectuée. Les résultats sont regroupés dans le tableau 5.

### Exemple 2 : Electrolyte solide préparé en voie fondue

2.a. Le mélange a été réalisé en incorporant 13.4 g de HNBR (zetpol 2010), 2.7 g de PPC (QPac40), 2.8 g de PPC polyol (Converge 212-10) et 8.2 g de LiTFSI dans un mélangeur interne. Après l'ajout des matières, ceux-ci ont été mélangées 85±10°C pendant 5 minutes.

**Tableau 2**

| Matière | % (m/m) |
|---|---|
| HNBR (Zetpol 2010L) | 49.4 |
| PPC (QPac40) | 10.3 |
| PPC (Converge212-10) | 10.0 |
| LiTFSI | 30.3 |

| | |
|---|---|
| % (m/m) : % exprimé en masse par rapport à la masse totale de la matière mélangée. | |

Le mélange final a été conformé en plusieurs films d'environ 100 µm d'épaisseur par calandrage en utilisant une Teachline CR72T de Dr Collin. Les films sont ensuite séchés pendant au moins 12 heures à 60°C sous vide effectué par une pompe Edwards RV12.

2.b. Un film de la même composition a été conditionné pendant 1 heure à 190°C.

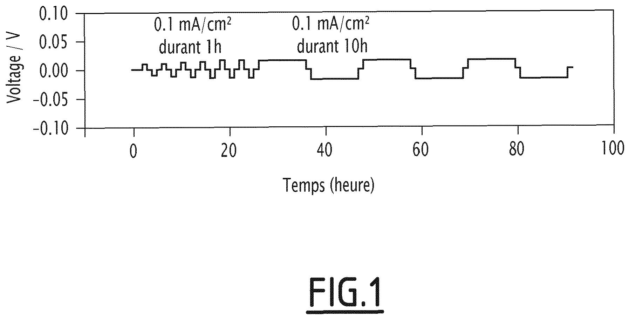

Enfin la mesure de conductivité des différents films a été effectuée, les résultats sont regroupés dans le tableau 5. Le comportement en polarisation du film conditionné est testé entre 2 électrodes de Lithium métallique soumis à diverses densités de courant (figure 1).

### Exemple 3 : Electrolyte solide préparé en voie fondue

3.a. Le mélange a été réalisé en incorporant 8.4 g de HNBR (zetpol 0020), 5.6 g de PPC (QPac40), 5.3 g de PPC polyol (Converge 212-10) et 8.4 g de LiTFSI dans un mélangeur interne. Après l'ajout des matières, ceux-ci ont été mélangées 85±10°C pendant 5 minutes.

**Tableau 3**

| Matière | % (m/m) |
|---|---|
| HNBR (Zetpol 0020) | 30.4 |
| PPC (QPac40) | 20.1 |
| PPC (Converge212-10) | 19.2 |
| LiTFSI | 30.3 |

| | |
|---|---|
| % (m/m) : % exprimé en masse par rapport à la masse totale de la matière mélangée. | |

Le mélange final a été conformé en plusieurs films d'environ 100 µm d'épaisseur par calandrage en utilisant une Teachline CR72T de Dr Collin. Les films sont ensuite séchés pendant au moins 12 heures à 60°C sous un vide effectué par une pompe Edwards RV12.

3.b. Un film de la même composition a été conditionné pendant 1 heure à 190°C.

Enfin la mesure de conductivité des différents films a été effectuée. Les résultats sont regroupés dans le tableau 5.

### Exemple 4 - Exemple comparatif

Dans un mélangeur interne de 30ml, le mélange a été réalisé en incorporant 12.2 g de PPC (QPac40) et 11.6g de PPC polyol (Converge 212-10) ainsi que 10.2g de LiTFSI. Après l'ajout des matières, ceux-ci ont été mélangées à 65±5°C pendant 5 minutes

**Tableau 4**

| Matière | % (m/m) |
|---|---|
| PPC (QPac40) | 35.9 |
| PPC (Converge212-10) | 34.1 |
| LiTFSI | 30.0 |

| | |
|---|---|
| % (m/m) : % exprimé en masse par rapport à la masse totale de la matière mélangée. | |

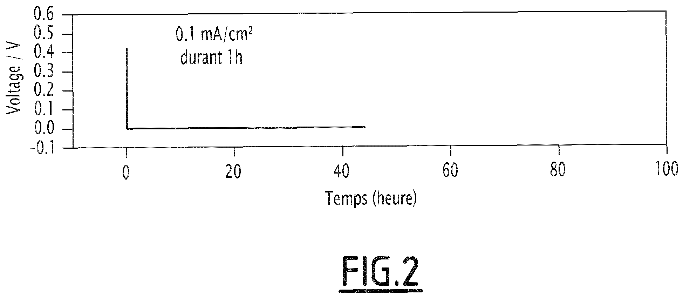

La mesure de conductivité des différents films a été obtenue, les résultats sont regroupés dans le tableau 5. Le comportement en polarisation du film conditionné est testé entre 2 électrodes de Lithium métallique soumis à 0,1mA/cm² (figure 2).

**Tableau 5 - Résultats**

| | Conductivité ionique (S/cm) | |
|---|---|---|
| | Avant Conditionnement (a) | Après Conditionnement (b) |
| | 60°C | 60°C |
| Exemple 1 | 2.4 10⁻⁶ | 5.7 10⁻⁵ |
| Exemple 2 | 4.3 10⁻⁶ | 3.3 10⁻⁵ |
| Exemple 3 | 1.2 10⁻⁵ | 2.1 10⁻⁴ |
| Exemple 4 (comparatif) | ** | |

| | | |
|---|---|---|
| ** La membrane est liquide à la température de 60°C | | |

### Exemple 5 : Electrode incorporant l'électrolyte solide polymère - préparés par voie fondue

Dans un mélangeur interne de 30ml, 4.8 g de HNBR (zetpol 2010), 3.0 g de PPC (QPac40), 2.9 g de PPC polyol (Converge 212-10), 4.6 g de LiTFSI, 33.5g de LiFePO₄ (Lifepower P2) et 2.6g de noir de carbone (Timcal C65). Après l'ajout des matières, ceux-ci ont été mélangées à 85±10°C pendant 5 minutes.

Le mélange final a une composition comme suit :

**Tableau 6**

| Matière | % (m/m)t |
|---|---|
| HNBR (Zetpol 2010) | 9.3 |
| PPC (QPac40) | 5.9 |
| PPC (Converge212-10) | 5.6 |
| LiTFSI | 9 |
| LiFePO₄ | 65.2 |
| C65 | 5 |

| | |
|---|---|
| % (m/m) : % exprimé en masse par rapport à la masse totale de la matière mélangée. | |

Le mélange final a été conformé en plusieurs films d'environ 50 µm d'épaisseur par calandrage en utilisant une Teachline CR72T de Dr Collin. Les films sont ensuite plaqués sur un collecteur de courant et puis séchés pendant au moins 12 heures à 60°C sous un vide effectué par une pompe Edwards RV12.

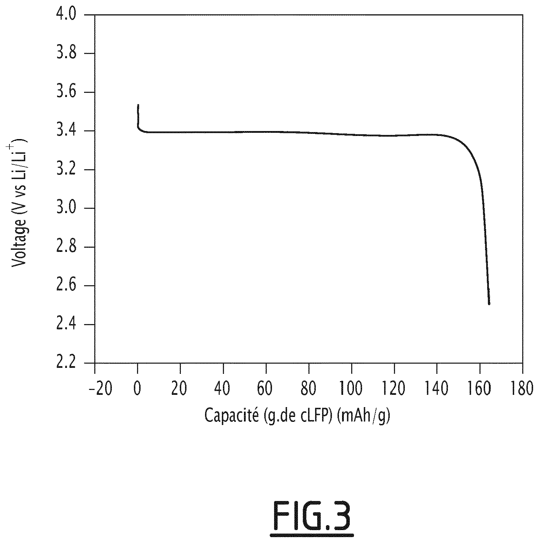

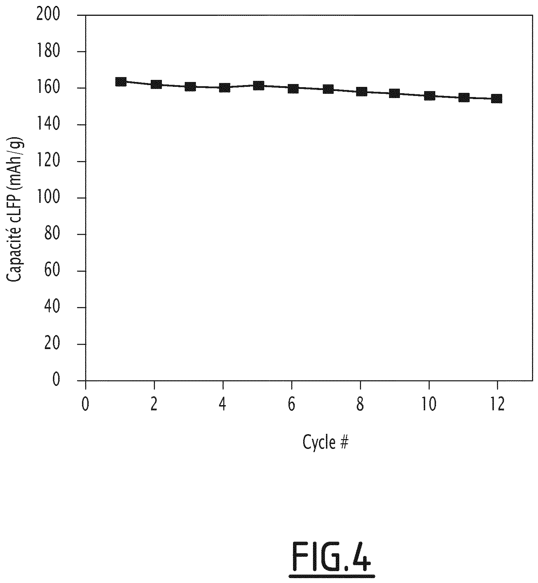

L'électrode, ainsi obtenue, a été assemblée en pile bouton en utilisant le mélange de l'exemple 1 comme séparateur d'une épaisseur d'environ 75µm et du Lithium métal comme anode. Les deux films ont été conditionnés pendant 1 heure à 190°C avant l'assemblage en batterie de type bouton. Nous obtenons une capacité de 164 mAh/g de LFP à 60°C à la première décharge à un régime de C/20 (figure 3) et est stable sur au moins 12 cycles (figure 4).

## Revendications

1. Electrolyte polymère solide comprenant une matrice polymère comprenant au moins un sel ionique, ladite matrice polymère comprenant au moins un carbonate de polyalcène, au moins un deuxième polymère différent du carbonate de polyalcène, et au moins le carbonate d'alcène issu de la décomposition du carbonate de polyalcène.

2. Electrolyte polymère solide selon la revendication 1, **caractérisé en ce que** le carbonate de polyalcène est présent en quantité de 5 à 80%, et de préférence de 10 à 70%, en masse par rapport à la masse totale de polymères de la matrice.

3. Electrolyte polymère solide selon l'une quelconque des revendications 1 à 2, **caractérisé en ce que** ladite matrice polymère comprend un carbonate de polyalcène de haute masse molaire et un carbonate de polyalcène de faible masse molaire, relativement l'un par rapport à l'autre.

4. Electrolyte polymère solide selon l'une quelconque des revendications 1 à 3, **caractérisé en ce que** le sel ionique est choisi parmi les sels d'un ion métallique dont le métal appartient à la colonne I du tableau périodique.

5. Electrolyte polymère solide selon l'une quelconque des revendications 1 à 4, **caractérisé en ce que** le sel ionique est choisi parmi le groupe constitué de LiBETI, LiC₂F₅SO₃, LiC₄F₉SO₃, LiCF₃SO₃, NaI, NaSCN, NaBr, KI, KBr, LiClO₄, LiBF₄, LiAsF₆, LiPF₆, LiNO₃, Li(CF₃SO₂)₂N, Li(CF₃SO₂)₃C, LiN(SO₂C₂F₅)₂, lithium alkyl fluorophosphates, lithium difluoro(oxalato)borate, lithium bis(oxalato) borate, MTFSiLi, STFSiLi, et l'un quelconque de leurs mélanges.

6. Electrolyte polymère solide selon l'une quelconque des revendications 1 à 5, **caractérisé en ce que** le deuxième polymère est choisi parmi les polyoléfines, les polycarbonates, les polymères halogénés, les polymères acryliques, les polymères acrylates, les polymères méthacrylates, les polymères vinyl acétate, les polyéthers, les polyesters, les polyamides, les polymères aromatiques, les polymères élastomères, par exemple le HNBR, les polyisoprènes, les polymères caoutchoucs, et l'un quelconque de leurs mélanges.

7. Electrolyte polymère solide selon l'une quelconque des revendications 1 à 6, **caractérisé en ce que** la matrice ne comprend pas de macroséparation entre la phase contenant le carbonate de polyalcène et la phase contenant le deuxième polymère.

8. Electrolyte polymère solide selon l'une quelconque des revendications 1 à 7, **caractérisé en ce que** la matrice comprend des charges solides minérales ou organiques.

9. Electrolyte polymère solide selon l'une quelconque des revendications 1 à 8, **caractérisé en ce que** l'électrolyte polymère solide est sous forme d'un film d'une épaisseur inférieure à 1mm.

10. Electrolyte polymère solide selon l'une quelconque des revendications 1 à 9, **caractérisé en ce que** ladite matrice polymère est obtenue par mélange du carbonate de polyalcène et du deuxième polymère par voie fondue ou par voie solvant dans lequel le carbonate de polyalcène et deuxième polymère sont tous les deux solubles.

11. Procédé de préparation d'un électrolyte polymère solide tel que défini selon l'une quelconque des revendications 1 à 10, ledit procédé comprenant le mélangeage du carbonate de polyalcène et du deuxième polymère par voie fondue ou par voie solvant dans lequel le carbonate de polyalcène et le deuxième polymère sont tous les deux solubles, et une décomposition partielle du carbonate de polyalcène en carbonate d'alcène, pour l'obtention d'un électrolyte polymère solide tel que défini selon l'une quelconque des revendications 1 à 10.

12. Procédé selon la revendication 11, **caractérisé en ce que** le procédé comprend un chauffage de l'électrolyte polymère solide.

13. Electrode comprenant au moins un électrolyte polymère solide tel que défini selon l'une quelconque des revendications 1 à 10 ou susceptible d'être obtenu selon un procédé tel que défini selon l'une quelconque des revendications 11 à 12.

14. Batterie comprenant au moins un électrolyte polymère solide tel que défini selon l'une quelconque des revendications 1 à 10 ou susceptible d'être obtenu selon un procédé tel que défini selon l'une quelconque des revendications 11 à 12.

15. Batterie selon la revendication 14, **caractérisée en ce que** la batterie est une batterie Lithium à électrolyte polymère solide.
